Europäisches Patentamt

European Patent Office

Office européen des brevets

(11) Publication number: **0 039 731**
**B1**

# EUROPEAN PATENT SPECIFICATION

(45) Date of publication of patent specification: **04.02.87**

(21) Application number: **80902351.8**

(22) Date of filing: **31.10.80**

(86) International application number:
**PCT/US80/01463**

(87) International publication number:
**WO 81/01331 14.05.81 Gazette 81/12**

(51) Int. Cl.⁴: **G 01 K 1/08**

(54) **FLOW DEVICE FOR SENSORS.**

(30) Priority: **05.11.79 US 91179**

(43) Date of publication of application:
**18.11.81 Bulletin 81/46**

(45) Publication of the grant of the patent:
**04.02.87 Bulletin 87/06**

(84) Designated Contracting States:
**DE FR GB SE**

(56) References cited:
**US-A-2 588 840**
**US-A-2 931 227**
**US-A-2 970 475**
**US-A-3 170 328**
**US-A-3 512 414**
**US-A-4 152 938**

**No relevant documents have been disclosed.**

㋱㎗ Proprietor: **ROSEMOUNT INC.**
**12001 West 78th Street**
**Eden Prairie, MN 55344 (US)**

(72) Inventor: **DELEO, Richard V.**
**609 Waterman Circle**
**Hopkins, MN 55343 (US)**

(74) Representative: **Cross, Rupert Edward Blount et al**
**BOULT, WADE & TENNANT 27 Furnival Street**
**London EC4A 1PQ (GB)**

Courier Press, Leamington Spa, England.

## Description

This invention relates to a device for measuring a parameter of a fluid stream, for example for measuring the temperature of the air stream flowing past an air vehicle in flight.

In US—A—4152938 there is disclosed a device for measuring a parameter of a fluid stream, comprising an elongate housing having a bore for flow of the fluid stream therethrough, the housing having a leading portion at a first fluid stream inlet end of the bore and a trailing portion at a second fluid stream outlet end of the bore; a plurality of ports from the bore to the exterior of the housing in the leading portion for providing boundary layer control; an annular fluid passageway in the housing downstream of the ports and coupled to and outboard of the bore and connected to the exterior of the housing to cooperate with the bore to provide a lower pressure area for fluid which flows through the annular fluid passageway; and sensor means to measure the parameter, the sensor means being supported in the annular fluid passageway between its coupling to the bore and its connection to the exterior of the housing.

As described in this prior specification, an essential feature of the device disclosed therein is that the bore through the housing be unobstructed, and to encourage fluid flow from the bore into the annular fluid passageway containing the sensor means, the exterior of the housing is shaped specifically to provide a suction effect to the exterior of the housing. This specific shaping is disadvantageous with regard to cost and base of manufacture of the device, and can have adverse effects in the overall boundary layer control for the device.

According to this invention such a known device is characterised by restriction means in the bore downstream of the coupling to the annular fluid passageway to provide internal regulation of the flow of the fluid stream through the bore.

The device of this invention has the advantages that the flow regulation provided by the restriction means enhances the operation of the device at Mach numbers above 0.5, while avoiding the disadvantages of the known device discussed above.

US—A—3170328 discloses the use of a restrictor means in a bore in a device for measuring a parameter of a fluid stream flowing in the bore, the restrictor means serving to provide internal flow regulation. However, in this known device the bore also contains the sensor means measuring the parameter, and this prior specification teaches that such an arrangement is essential there being no disclosure or suggestion of locating the restriction means other than in the bore containing the sensor means.

With the device of this invention, when the fluid stream is air, Mach number regulation in the bore is provided. Regulation of the rate of flow internal to the device enhances operation at higher ambient flow rates. For example, for operation in air at higher subsonic Mach numbers, e.g. above Mach 0.5 poor overall performance such as poor accuracy and repeatability, is avoided. Selection of a restriction means to regulate the internal rate of flow for air to a Mach number between 0.1 and 0.5 has resulted in enhanced performance. Further, the restriction means raises the internal pressure so that routing of a portion of undisturbed fluid to the sensor means in the annular fluid passageway is more easily accomplished. Because of porting of fluid from the bore for boundary layer control, the sensor means is subjected to relatively undisturbed, free stream fluid parameters such as temperature which, for example, is raised substantially adiabatically upon impingement on the sensor means.

A particular advantage is that since the internal pressure is raised due to the restriction means, it is not necessary for the external shape of the housing to increase in diameter rearwardly as required for the device of US—A—4,152,938. The internal pressure is raised considerably above the local static pressure and, hence, flow is more easily induced into the annular fluid passageway and to the sensor means. Similarly, the raised internal pressure compared to the local static pressure enables porting of the first passageway to the exterior of the device from an area of constant diameter.

It will be understood that the fluid stream may be moving relative to the device which can be in a fixed location such as in a gas conduit, wind tunnel or the like, or the device may be mounted on an air vehicle, such as an aircraft, missile, helicopter, or the like, with such air vehicle moving through the fluid or air mass.

This invention will now be described by way of example with reference to the drawings, in which:—

Figure 1 is a sectional view of a first device according to the invention taken on line 1—1 in Figure 2 with a fragmentary view of the supporting strut for mounting the device;

Figure 2 is a sectional view of the first device taken on line 2—2 in Figure 1;

Figure 3 is a fragmentary sectional view of a temperature sensor means for use in the device of the present invention;

Figure 4 is a fragmentary sectional view of a second device according to the invention having electrical anti-icing, taken on the same line as Figure 1, and a fragmentary view of the supporting strut; and

Figure 5 is a sectional view of a third device according to the invention taken on the same line as Figure 1, and a fragmentary view of the supporting strut.

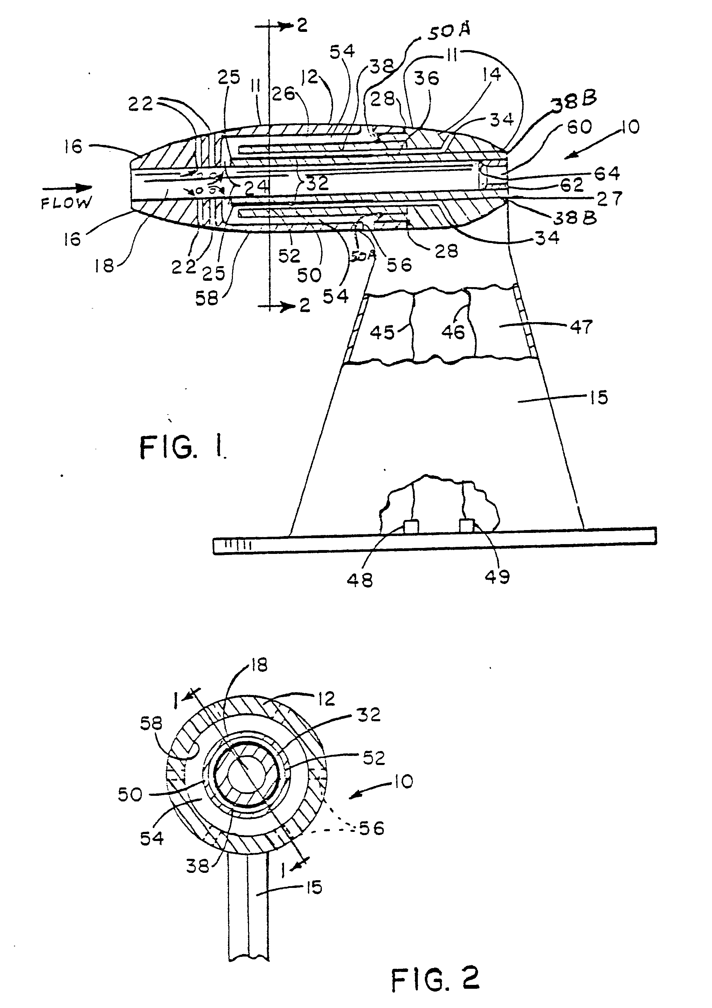

A first preferred embodiment of a device for measuring a parameter in a fluid stream is shown in Figure 1 and Figure 2 and is generally indicated at 10. Device 10 includes a housing 11 which is formed of two main housing elements connected together, a leading portion 12 and a trailing portion 14 which together form the elongate shape of device 10. A strut 15 connected to trailing portion 14 supports device 10 in a desired position relative to a flow stream. Leading portion 12 is cast or formed from a cylindrical block of metal. A flow face 16 is contoured to provide a relatively sleek aerodynamic shape and to reduce drag. A central, relatively uniform bore 18 is made substantially along the axis of the housing 11 for flow therethrough. Leading portion 12 has an inlet port for fluid flow, which flow is indicated as left to right by the arrow in Figure 1. Bore 18 through trailing portion 14 is the main outlet for fluid flow.

At the point on flow face 16 where the leading portion 12 approaches its maximum exterior diameter a first series of ports 22, which preferably are two rows of six ports each spaced around leading portion 12, are provided and the ports extend through the wall of leading portion 12 to bore 18. These ports 22 cooperate with bore 18 to exhaust flow from bore 18 to the exterior, thus providing boundary layer control (BLC) in bore 18. This concept is fully explained in US—A—2,970,475.

Trailing portion 14 is also cast or formed from a metal block, and has a first end 25 and an outlet end 27. The first end 25 of trailing portion 14 is suitably dimensioned to be inserted into a large bore 26 in leading portion 12 thus forming an annular passageway open to bore 18 through an annular inlet 24. Leading portion 12 and trailing portion 14 are connected together in a conventional manner as by welding, brazing or the like where surfaces of the two overlap as at 28. Ports 22 are spaced closely upstream from annular inlet 24 and the flow through ports 22 urges the lighter particles of the flow, for example, the molecules forming air, to change direction more than the heavier particles such as the suspended solids, raindroplets or the like. Similarly, the lighter particles tend to flow into the annular inlet 24 from bore 18.

A first annular passageway 32 is formed by casting or machining in trailing portion 14 radially outboard of bore 18. Passageway 32 has a plurality of ports 34, preferably six, which are angled from the longitudinal or flow axis. Ports 34 are located near the maximum exterior diameter of trailing portion 14, but may exhaust parallel to the longitudinal or flow axis. Passageway 32 then cooperates with bore 18, inlet 24 and ports 34 as well as ports 22 to provide a relatively undisturbed flow of fluid through passageway 32.

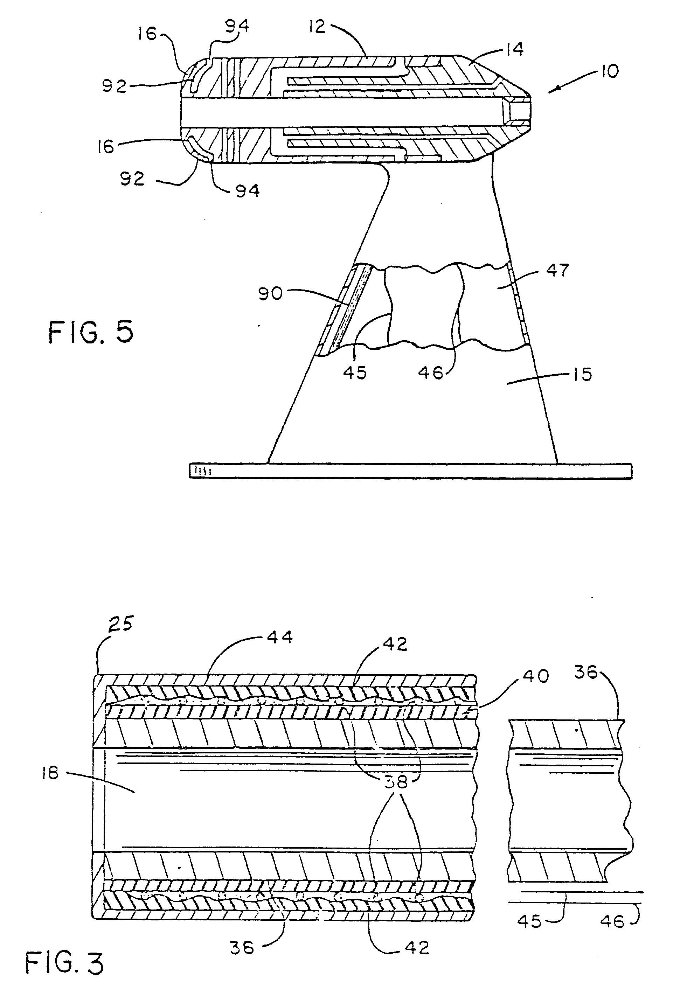

An inner surface 36 of passageway 32 has a sensor element 38 disposed thereon. One example of a sensor is shown in Figure 3. An insulator layer 40 such as mica is first disposed on surface 36. An element 38 which preferably is a platinum wire resistor, is then wrapped over insulator 40 and a second layer of an insulator 42 is then disposed on element 38. For further protection for element 38 an outer tube 44 is slid or drawn over the entire element 38. Tube 44 may then be mechanically or hydrostatically swaged onto element 38 to further improve ruggedness and response time. Conventional treatment to hermetically seal element 38 is also provided. Suitable leadwires 45 and 46 are then conventionally connected to ends of sensor 38 respectively in a flow direction longitudingally aft of sensor 38 in trailing portion 14. As best shown in Figure 1, leadwires 45 and 46 are then routed through a central cavity 47 in strut 15 to a desired interface connection 48 or 49 respectively. Other sensors such as pyrometers, thermocouples, humidity sensors, pressure sensors or the like and known mounting methods for such sensors may be used. Sensor 38 is mounted in position before housing portions 12 and 14 are joined together.

The ruggedness of a resistance wire wound over a sleeve is time tested and proven in years of applications in other temperature sensing applications. Sensing element 38 embodies this construction, which provides a substantially greater expected life than bare wire sensors. Response time and ruggedness of sensor 38 is improved by swaging tube 44.

An annular (tubular) separator 50 is formed in trailing portion 14. Separator 50 provides an outboard barrier 52 for first passageway 32 and radiation shielding for sensor 38. Separator 50 in cooperation with the large bore 26 of leading portion 12 also forms a second annular passageway 54 in device 10. Second passageway 54 exhausts to the exterior through a plurality of ports 56, preferably six. Ports 56 are located somewhat aft of the longitudinal midpoint of device 10. Passageway 54 in cooperation with the fluid stream in bore 18, inlet 24, and ports 56 provides a third path for the fluid stream flow. Passageway 54 further urges the flow into inlet 24 and provides further BLC so that the flow reaching sensor 38 is relatively undisturbed having substantially free stream flow characteristics. Exterior wall 58 surrounding large bore 26 provides a second radiation shield for sensing element 38. To permit ease for mounting sensor 38 on inner surface 36, trailing portion 14 is an assembly comprised of separator 50 which has a cylindrical shape and is brazed to trailing portion 14 at 50A, then the tube 38A which has sensor 38 mounted on its inner surface 36 is brazed to trailing portion 14 at 38B.

A restriction means or sonic throat 60 is formed at outlet end 27 of trailing portion 14 by welding or brazing a suitable metal insert 62 to the inner wall of bore 18, thus reducing the effective inside diameter of bore 18 at outlet end 27. Insert 62 on its flow facing side is formed to have a taper 64 from bore 18 to the reduced diameter of insert 60 to reduce turbulence in the flow caused by insert 60. In one preferred embodiment for air flow, the diameter of bore 18 was 6 millimeters and the minimum diameter of insert 60 was 5 millimeters and the maximum diameter of the device was 118 millimeters, thus regulating the rate of flow of air for higher subsonic Mach numbers of air flow to Mach 0.35 in bore 18. It is understood that other bore and insert diameters for regulation to other selected flow rates for other fluids or other Mach numbers for air are determined using conventional calculation methods.

In operation, restriction means or throat 60 regulates the rate of fluid flow through device 10 and raises the internal pressure in bore 18 to further urge flow through both ports 22 and inlet 24, and through passageways 32 and 54. This increased internal pressure urging the flow through such ports and passageways enhances conditions so that fluid reaching sensor 38 has parameters substantially similar to the fluid stream in an undisturbed and uncontaminated state.

The construction of this embodiment both takes advantage of the device of US—A—4152938 by routing heavier particles in the fluid through bore 18, while diverting only relatively undisturbed free stream fluid to the sensor 38. Restriction means or throat 60 enhances the capability of device 10 to divert the fluid with minimal disturbance or turbulence added thereto.

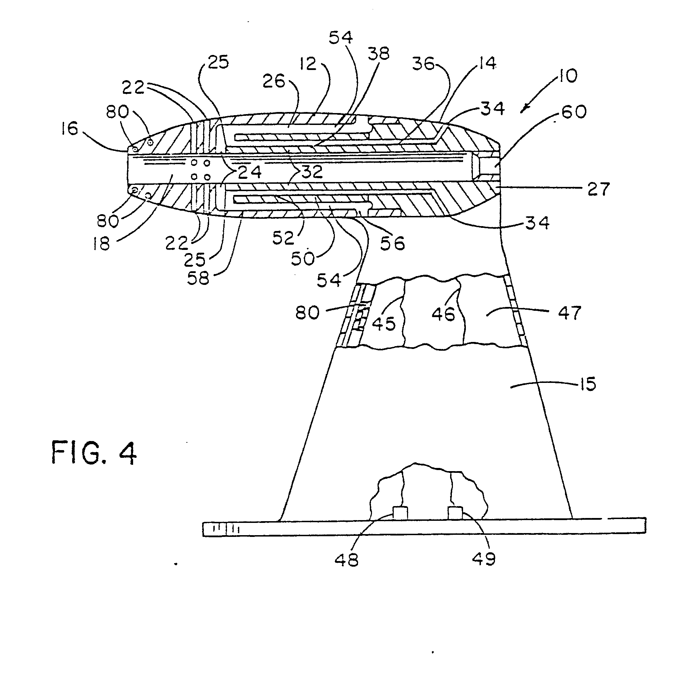

In the device shown in Figure 4 flow face 16 of leading portion 12 has an electrical heating element 80 therein for anti-icing. Cavity 47 in strut 15 is shown with leadwires 45 and 46 and heating element 80 therein. The heating element 80 comprises two conductors with a resistance therebetween. The conductors are held at different potentials and hence a current flows through the resistance thus generating heat for anti-icing. Other conventional heating elements such as coils, resistors or the like may be used. As shown, heating element 80 is conventionally disposed in flow face 16 in leading portion 12, and also in cavity 47 near the leading edge of strut 15 to provide anti-icing on such leading edge, and may also be disposed in outlet end 27 or other areas of device 10 for anti-icing as desired.

In the device shown in Figure 5 flow face 16 of leading portion 12 is shown as somewhat more blunt than as shown in Figure 1. In this device, cavity 47 in strut 15 is shown with leadwires 45 and 46 and a conduit 90 for carrying hot gas, such as engine bleed air from a jet engine compressor of an air vehicle, or rocket exhaust gas or the like, which conduit 90 is provided to conduct heat to flow face 16 for anti-icing. Conduit 90 preferably is routed through the leading edge of strut 15 to provide anti-icing there also. Conduit 90 is coupled to an annular cavity 92 in leading portion 12 in which the hot gas circulates to heat flow face 16. The hot gas is then exhausted through a suitable configuration of hot gas ports 94. If desired, such hot gas may also be routed to outlet end 27 or other areas of housing 11.

**Claims**

1. A device for measuring a parameter of a fluid stream, comprising an elongate housing (11) having a bore (18) for flow of the fluid stream therethrough, the housing (11) having a leading portion (12) at a first fluid stream inlet end of the bore (18) and a trailing portion (14) at a second fluid stream outlet end of the bore (18); a plurality of ports (22) from the bore (18) to the exterior of the housing (11) in the leading portion (12) for providing boundary layer control; an annular fluid passageway (32) in the housing (11) downstream of the ports (22) and coupled to and outboard of the bore (18) and connected to the exterior of the housing (11) to cooperate with the bore (18) to provide a lower pressure area for fluid which flows through the annular fluid passageway (32); and sensor means (38) to measure the parameter, the sensor means (38) being supported in the annular fluid passageway (32) between its coupling (24) to the bore (18) and its connection to the exterior of the housing (11), characterised by restriction means (60) in the bore (18) downstream of the coupling (24) to the annular fluid passageway (32) to provide internal regulation of the flow of the fluid stream through the bore (18).

2. A device according to Claim 1, characterized by a second annular passageway (54) in the housing (11) outwardly of the annular fluid passageway (32), coupled to the bore (18) and to the annular fluid passageway (32) and ported to the exterior of the housing (11) to enhance flow of fluid to the sensor means (38), which flow has parameters substantially similar to the fluid stream in an undisturbed state.

3. A device according to Claim 1 or Claim 2, characterized in that the restriction means (60) serves to regulate the internal fluid flow rate to between Mach 0.1 and Mach 0.5, when the fluid stream is air.

4. A device according to Claim 3, characterized in that the restriction means (60) serves to regulate the internal fluid flow rate to Mach 0.35.

5. A device according to any preceding claim, characterized in that the leading portion (12) has a blunt nose.

6. A device according to any preceding claim, characterized in that the leading portion (12) has heating means (80; 92) for anti-icing therein.

7. A device according to Claim 2 or any one of Claims 3 to 6 as dependent on Claim 2, characterized in that the wall (50) forming the second annular passageway (54) is of a material to provide radiation shielding for the sensor means (38).

8. A device according to any preceding claim, characterized in that the sensor means (38) is a platinum resistor.

9. A device according to any preceding claim, characterised in that the sensor means (38) comprises an internal element and an outer covering hermetically sealing the internal element.

**Revendications**

1. Dispositif pour mesurer un paramètre d'un courant de fluide, comprenant un corps de forme allongée (11) traversé par une forure (18) à travers laquelle s'écoule le courant de fluide, le corps (11) comprenant une partie antérieure (12) au niveau d'une première extrémité d'entrée du courant de fluide dans la forure (18) et une partie postérieure (14) au niveau d'une seconde extrémité de sortie du courant de fluide de la forure (18); plusieurs orifices (22) entre la forure (18) et l'extérieur du corps (11) dans la partie antérieure (12) pour assurer un contrôle de la couche limite; un passage annulaire de fluide (32) dans le corps (11) en aval des orifices (22), accouplé à la forure (18) à l'extérieur de celle-ci et en communication avec l'extérieur du corps (11) pour coopérer avec la forure (18) de manière à créer une zone de plus faible pression pour le fluide qui s'écoule à travers le passage annulaire de fluide (32); et des moyens détecteurs (38) pour mesurer le paramètre, ces moyens détecteurs (38) étant montés dans le passage annulaire de fluide (32) entre le point d'accouplement (24) de celui-ci à la forure (18) et son point de communication avec l'extérieur du corps (11), caractérisé par des moyens de restriction (60) dans la forure (18) en aval du point d'accouplement (24) au passage annulaire de fluide (32) pour assurer un réglage interne de l'écoulement du courant de fluide à la forure (18).

2. Dispositif selon la revendication 1, caractérisé par un second passage annulaire (54) dans le corps (11) à l'extérieur du passage annulaire de fluide (32), raccordé à la forure (18) et au passage annulaire de fluide (32) et communiquant par des orifices avec l'extérieur du corps (11), pour renforcer l'écoulement de fluide vers les moyens détecteurs (38), écoulement qui a des paramètres pratiquement semblables au courant de fluide à l'état non perturbé.

3. Dispositif selon la revendication 1 ou 2, caractérisé en ce que les moyens de restriction (60) servent à régler la vitesse d'écoulement du fluide interne à une valeur comprise entre mach 0,1 et mach 0,5, lorsque le fluide est l'air.

4. Dispositif selon la revendication 3, caractérisé en ce que les moyens de restriction (60) servent à régler la vitesse d'écoulement du fluide interne à mach 0,35.

5. Dispositif selon l'une quelconque des revendications 1 à 4, caractérisé en ce que la partie antérieure (12) a un nez non pointu.

6. Dispositif selon l'une quelconque des revendications 1 à 6, caractérisé en ce que la partie antérieure (12) contient des moyens chauffants (80; 92) à des fins de dégivrage.

7. Dispositif selon la revendication 2 ou l'une quelconque des revendications 3 à 6 sous la dépendance de la revendication 2, caractérisé en ce que la paroi (50) qui forme le second passage annulaire (54) est faite d'une matière assurant une protection contre le rayonnement pour les moyens détecteurs (38).

8. Dispositif selon l'une quelconque des revendications 1 à 7, caractérisé en ce que les moyens détecteurs (38) sont une résistance de platine.

9. Dispositif selon l'une quelconque des revendications 1 à 8, caractérisé en ce que les moyens détecteurs (38) comprennent un élément intérieur et un recouvrement extérieur qui renferme de manière hermétique l'élément intérieur.

**Patentansprüche**

1. Vorrichtung zum Messen eines Parameters eines Fluidstromes, mit einem länglichen Gehäuse (11) mit einer Bohrung (18), die von dem Fluidstrom durchströmbar ist, wobei das Gehäuse (11) einen vorderen Bereich (12) an einem ersten Fluidstrom-Einlaßende der Bohrung (18) und einen hinteren Bereich (14) an einem zweiten Fluidstrom-Auslaßende der Bohrung (18) aufweist; mit einer Mehrzahl von Öffnungen (22) von der Bohrung (18) zur Außenseite des Gehäuses (11) in dem vorderen Bereich (12) zur Schaffung einer Grenzschichtsteuerung; mit einer ringförmigen Fluid-Leitung (32) in dem Gehäuse (11) stromabwärts der Öffnungen (22), die mit der Bohrung (18) gekoppelt und außerhalb dieser angeordnet ist und die mit der Außenseite des Gehäuses (11) verbunden ist, um mit der Bohrung (18) zur Erzeugung eines Bereichs niedrigeren Drucks für Fluid, das durch die ringförmige Fluid-Leitung (32) fließt, zusammenzuwirken; und mit einer Erfassungsvorrichtung (38) zur Erfassung des Parameters, wobei die Erfassungsvorrichtung (38) in der ringförmigen Fluid-Leitung (32) zwischen deren Verbindung (24) mit der Bohrung (18) und deren Verbindung mit der Außenseite des Gehäuses (11) abgestützt ist, gekennzeichnet durch eine Begrenzungseinrichtung (60), die in der Bohrung (18) stromabwärts der Verbindung (24) mit der ringförmigen Fluid-Leitung (32) zur Erzeugung einer internen Strömungsregelung des Fluidstroms durch die Bohrung (18) angeordnet ist.

2. Vorrichtung nach Anspruch 1, gekennzeichnet durch eine zweite ringförmige Leitung (54) in dem Gehäuse (11), die außerhalb der ringförmigen Fluid-Leitung (32) angeordnet ist und mit der Bohrung (18) und mit der ringförmigen Fluid-Leitung (32) verbunden ist und an die Außenseite des Gehäuses (11) zur Förderung des Fluid-Stromes zu der Erfassungsvorrichtung (38) angeschlossen ist, welcher Strom Parameter aufweist, die denen des Fluid-Stromes in unverwirbeltem Zustand im wesentlichen ähnlich sind.

3. Vorrichtung nach Anspruch 1 oder 2, dadurch gekennzeichnet, daß die Begrenzungseinrichtung (60) zur Regelung der internen Fluid-Strömungsgeschwindigkeit auf einen Wert zwischen 0,1 Mach und 0,5 Mach dient, wenn das Fluid Luft ist.

4. Vorrichtung nach Anspruch 3, dadurch gekennzeichnet, daß die Begrenzungseinrichtung (60) zur Regelung der internen Fluid-Strömungsgeschwindigkeit auf 0,35 Mach dient.

5. Vorrichtung nach einem der vorhergehenden Ansprüche, dadurch gekennzeichnet, daß der vordere Bereich (12) eine stumpfe Nase aufweist.

6. Vorrichtung nach einem der vorhergehenden Ansprüche, dadurch gekennzeichnet, daß der vordere Bereich (12) eine Heizvorrichtung (80; 92) zur Enteisung enthält.

7. Vorrichtung nach Anspruch 2 oder einem der Ansprüche 3 bis 6, soweit sie von Anspruch 2 abhängen, dadurch gekennzeichnet, daß die Wand (50), die die zweite ringförmige Leitung (54) bildet, aus einem Material zur Schaffung eines Strahlenschutzes für die Erfassungsvorrichtung (38) besteht.

8. Vorrichtung nach einem der vorhergehenden Ansprüche, dadurch gekennzeichnet, daß die Erfassungsvorrichtung (38) ein Widerstand aus Platin ist.

9. Vorrichtung nach einem der vorhergehenden Ansprüche, dadurch gekennzeichnet, daß die Erfassungsvorrichtung (38) ein inneres Element und eine äußere Abdeckung aufweist, die das innere Element hermetisch abdichtet.

FIG. I.

FIG. 2

FIG. 5

FIG. 3

FIG. 4